# EUROPEAN PATENT SPECIFICATION

(11) **EP 2 534 290 B1**
(45) Date of publication and mention of the grant of the patent: **08.01.2014**
(21) Application number: 11703803.4
(22) Date of filing: 09.02.2011
(51) Int. Cl.: B32B 27/02, B32B 29/02, D04H 1/54, B32B 5/26, D04H 13/00

(54) **METHOD OF CONSTRUCTION OF A HIGH LOFT NONWOVEN SHEET MATERIAL**
HERSTELLUNGSVERFAHREN FÜR EIN VOLUMINÖSES BAHNENVLIESMATERIAL
METHODE DE FABRICATION D'UN MATÉRIAU NON TISSÉ VOLUMINEUX

(30) Priority: 09.02.2010 US 302767 P; 09.03.2010 US 720119
(43) Date of publication of application: 19.12.2012
(73) Proprietor: Federal-Mogul Powertrain, Inc., Southfield, MI 48033 (US)
(72) Inventor: MEHBUBANI, Ritesh, Telford, PA 18969 (US); TAYLOR, Brian, Morgantown, PA 19543 (US); YANCHEK, Stephen, P., Phoenixville, PA 19460 (US); STAUDT, Eric, K., Reading, PA 19606 (US)
(74) Representative: Harrison Goddard Foote LLP
(86) International application number: PCT/US2011/024136
(87) International publication number: WO 2011/100281

(56) References cited:
- WO-A1-2008/086458

## Description

### BACKGROUND OF THE INVENTION

### 1. Technical Field

This invention relates generally to nonwoven sheets and methods for their construction, and more particularly to acoustic, thermal and/or structural sheets constructed at least partially from waste material constituents ordinarily not suitable for reprocessing, more particularly, a mixture including Asian cardboard.

### 2. Related Art

In order to reduce the costs associated with manufacturing nonwoven fabrics and materials and to minimize potentially negative affectson the environment, many consumer products are constructed using recycled constituents. For example, automobile manufacturers in the United States use recycled materials to construct nonwoven fabrics and materials having various uses, including sound absorption and/or insulation materials. Some reclaimed or recycled materials used to construct sound absorbing vehicle panels include fabric shoddy, such as, for example, cotton, polyester, nylon, or blends of recycled fabric fibers. Cotton shoddy is made from virgin or recycled fabric scraps that are combined and needled to form a nonwoven fabric. Another product constructed from recycled standard cardboard papers or fibers, used on a limited basis to absorb oils, is Ecco paper. This product uses standard cardboard and has no additives making it fire retardant, mildew resistant or "dust out" resistant.

U.S. commercial establishments and consumer product manufacturers, for example, automotive component parts and original equipment manufacturers, receive numerous shipments from various Asian countries, such as China and Korea, for example, in boxes or containers constructed of low grade "Asian cardboard." The Asian cardboard has constituents of very short, very fine fibers from previously recycled pine cardboard, as well as bamboo and rice fibers. As such, attempts to recycle Asian cardboard into paper, cardboard or other structural panel products through the paper mill process has been met with failure. The failed attempts are a result of the very fine constituents of the Asian cardboard being flushed through the screens or mesh used to carry pulp in the paper/cardboard manufacturing process The flushed constituents of the Asian cardboard are thereafter channeled into the environment via the resulting waste stream of the recycling process. Further yet, the fine constituents of Asian cardboard provide further difficulty in fabricating a "high loft, low density" end product, due to the inherent compaction of the fine fibers during processing, aside from their being flushed, as aforementioned. Accordingly, for at least these reasons Asian cardboard is considered to be waste, and thus, is either sorted from recyclable standard cardboard at a relatively high labor cost and sent to landfills (during sorting, the Asian cardboard is readily identifiable from standard cardboard due to its relatively flimsy structure and its pale brown or greenish color) or the entire bale is scrapped if there is more than about 5% Asian cardboard mixed in the bale of reclaimed cardboard, which also comes at a relatively high cost to both the product manufacturer and the environment

### SUMMARY OF THE INVENTION

According to the invention, a method of constructing a nonwoven sheet material with Asian cardboard is provided, wherein the sheet material constructed is useful for forming structural and/or acoustic and/or thermal panels. The method includes providing Asian cardboard and comminuting the cardboard into pieces of a predetermined size Further, combining the reduced size pieces of cardboard with heat bondable textile fibers and staple fibers to form a substantially homogenous mixture, and then, forming a web from the mixture. Then, thermally bonding the constituent ingredients of the web to produce a matt of a desired, predetermined thickness. Further yet, laminating a scrim layer to at least one side of the matt while maintaining the thickness of the matt as initially produced.

In accordance with a further feature of the invention, the method includes applying a chemical mixture, including a flame retardant, a biocide and a binder, to at least one surface of the matt and maintaining the thickness of the matt as initially produced. Then, drying and curing the matt before laminating the scrim to the matt.

In accordance with a further feature of the invention, the method includes winding the matt and controlling the tension applied to the matt during the winding process to avoid compacting the "as formed thickness" of the matt.

Following the method according to the invention, an acoustic nonwoven sheet is provided. The nonwoven sheet includes a matt formed from Asian cardboard, heat bondable textile fibers, and staple fibers thermally bonded together to a desired thickness. Further, a scrim layer is attached to at least one side of the matt using either no nip or one with little to no pressure, wherein upon, the matt retains or substantially retains its thickness as initially produced.

Such an acoustic nonwoven sheet formed in accordance with the invention may include a chemical mixture, including a flame retardant, a biocide and a binder, applied, dried and cured to at least one surface of the web using a method that retains the thickness of the web.

Accordingly, the invention herein provides a method for production of a nonwoven sheet, such as those suitable for use in acoustic, thermal or structural applications, by recycling, at least in part, Asian cardboard to create a "high loft" nonwoven acoustical, thermal or otherwise structural panel that retains a low density matt throughout fabrication that can be used in a variety of applications, such as automobiles.

### BRIEF DESCRIPTION OF THE DRAWINGS

These and other aspects, features and advantages of the present invention will become more readily appreciated when considered in connection with the following detailed description of presently preferred embodiments and best mode, appended claims and accompanying drawings, in which:

Figure 1 is a partial perspective view of a nonwoven sheet constructed in accordance with one presently preferred method of the invention; and
Figure 2 is a process flow diagram illustrating a method of constructing a nonwoven sheet in accordance with the invention.

### DETAILED DESCRIPTION OF PRESENTLY PREFERRED EMBODIMENTS

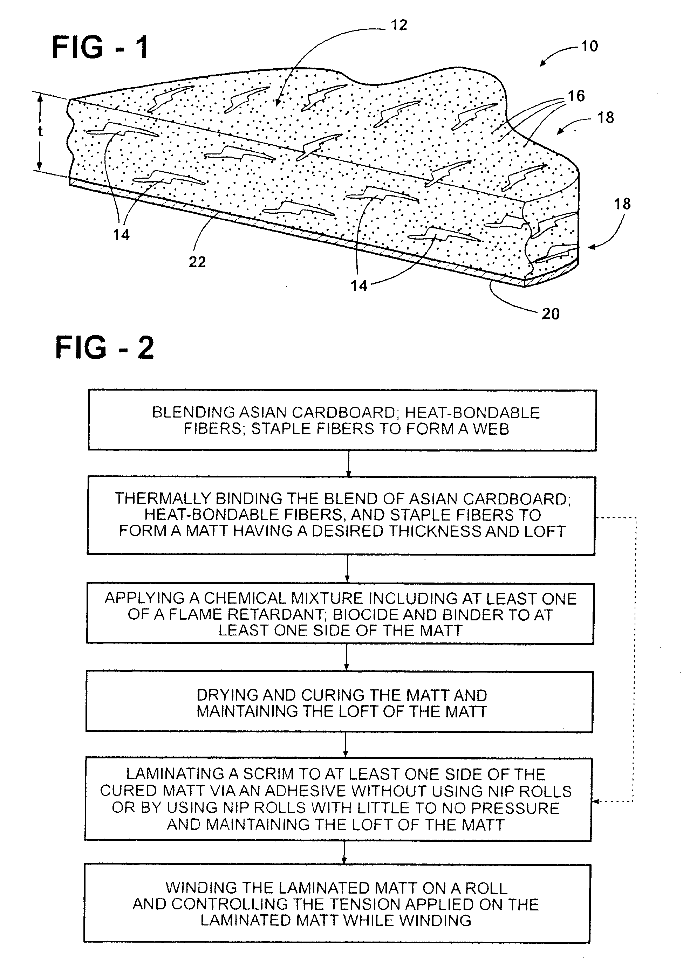

Referring in more detail to the drawings, Figure 1 illustrates a high loft, green non-woven sheet generally at 10, also referred to simply as sheet material or panel, that is constructed in accordance with one aspect of the invention. The panel 10 can be configured for use in any number of applications, such as for an automotive vehicle component, for example. The panel 10 is constructed having a "high loft" (i.e. low density) matt 12 that provides excellent noise damping or attenuation properties, thus, functioning particularly well as an acoustic panel. Further the panel 10 can be constructed having fire retardant properties, if intended for use in high temperature environments, such as near an exhaust system or within a vehicle engine comportment, for example. The panel 10 is constructed, at least in part, from Asian cardboard 14, staple fibers, and heat-bondable fibers, e.g. bi-component fibers which are represented generally at 16. Further, the panel 10 can be constructed using a chemical mixture coating 18, including a flame retardant, a biocide and a binder, which is applied, dried and cured to at least one outer surface thereof. Further yet, the panel 10 has a scrim layer 20 attached to at least one side of the matt 12, wherein the scrim layer 20 is attached either by using little to no pressure on nip rollers or not using nip rollers at all, thus retaining or substantially retaining the matt's 12 thickness as initially produced. Accordingly, the finished panel 10 provides a low density structure, "high loft", with the scrim layer 20, thereby providing excellent noise attenuation properties. Further, with the panel 10 being constructed at least in part from post consumer or recycled Asian cardboard 14, the environment is benefited, such that the reclaimed Asian cardboard 14 is kept from being sent to landfills, from being incinerated, or otherwise being classified as waste.

The content of the cardboard, whether mixed with or provided from 100% Asian cardboard, is preferably between about 25-99 weight percent (wt %) of the total web weight, depending on the desired performance characteristics of the panel 10 being constructed. The Asian cardboard 14 is considered to be a low grade, non-recyclable cardboard due to its being constructed from inferior constituent ingredients, such as low quality, very short and fine recycled fibers, e.g. bamboo fibers, jute fibers, rice fibers, and/or other scrap/waste materials. As such, Asian cardboard is typically considered to be a serious non-recyclable waste contaminant, whether on its own or if bailed or otherwise included in reclaimed post consumer cardboard loads. Accordingly, if Asian cardboard is bailed with standard U.S. cardboard or other higher quality cardboard, then the entire bail or load is typically considered to be non-recyclable waste. Asian cardboard can be readily distinguished from higher quality U.S. cardboard by its flimsiness and characteristic pale brown, yellow or greenish color. Accordingly, Asian cardboard is typically separated from higher U.S. quality cardboard, and sent to landfills, burned, or otherwise disposed.

The inability of Asian cardboard to be recycled stems from the constituent ingredients of the inferior fibers used in the construction of the Asian cardboard, which are generally very short and thus very weak. Given the relatively fine size of the fibers and other powdery ingredients in Asian cardboard, if the Asian cardboard is processed in known "wet" recycling processes along with standard cardboard having fibers of an increased length, the ingredients of the Asian cardboard get flushed through the screens and carried into the waste stream, and typically plug and otherwise damage the recycling equipment. Accordingly, in accordance with one aspect of the invention, the construction of the panel 10 is performed in a "dry" webbing process, thereby allowing the utilization of the inferior Asian cardboard along with the fibers having a length less than 0.2mm (referred to as "fines") in it's manufacture.

The staple fibers can be provided from any suitable textile fiber that not only retains height in a low density matt but also is light in weight and provides a high level of sound absorption, and the heat bondable fibers can be provided, for example, as a low temperature melt polymeric material, such as fibers of polyethylene, PET or Nylon, and/or thermoplastic bi-component fibers whose outer sheath, such as polypropylene, for example, melts when heated above its melting point. As illustrated in a flow chart in Figure 2, the process for constructing the panel 10 includes mixing or blending the comminuted Asian cardboard 14 with the staple fibers and heat-bondable fibers 16 to form a web. The webbing process, which may be performed, for example, on a Rando machine, forms a homogenously mixed fiber/paper mat or web, with the fibers of the cardboard 14 being randomly oriented.

Then, upon forming the web, the web is heated, such as in an oven, to a temperature suitable to melt the heat-bondable fibers, (e.g., the melting point of the outer portion of a bi-component low melt fiber may be approximately 110°C - 180°C), thereby thermally bonding the blend of Asian cardboard 14 with the staple fibers and heat-bondable fibers 16. As such, the web is formed into the matt 12, wherein the matt 12 attains a desired high loft, low density increased thickness t. Without this higher thickness, the lower sound frequencies, which arc typically targeted by automotive manufacturers, cannot be absorbed by the matt 12.

Then, upon forming and cooling the matt 12, the chemical mixture 18, including at least one of a heat resistant or flame retardant (FR) coating, such as Ammonium Sulfate, Ammonium Phosphate, or Boric Acid, for example, a biocide and a binder, by way of example and without limitation, SBR with a Tg of +41, can be applied, such as in a spraying process, to at least one side, and preferably to the entire outer surface of the matt 12. The spraying application of the chemical mixture 18 acts to maintain the thickness t of the matt 12, thereby preserving its high loft, low density, and thus, its noise attenuating properties. Upon applying the mixture 18, the mixture 18 is then dried and cured to the matt 12.

The resulting coated, nonwoven matt 12 then has the thin nonwoven fabric or impervious film layer, referred to simply as scrim layer 20, attached or bonded to one or both sides thereof. The scrim layer 20 is bonded to the side or sides of the matt 12 using a suitable heat resistant adhesive, shown generally at 22. It is critical that the thickness t of the matt 12 be maintained or substantially maintained while attaching the scrim layer 20 in order to retain the high loft, low density of the matt 12 as initially formed, thereby providing the desired noise attenuating properties to the panel 10. This can be attained by either not using a nip roller or using one with little to no pressure. If higher pressures are used on the nip roll, it would tend to compact the thickness t of the matt 12, thereby causing it to become increased in density, reduced in thickness, and thus, diminishing its targeted noise attenuating properties. The higher retained thickness, along with the scrim layer 20, combine to attenuate lower sound frequencies.

Lastly, upon constructing the sheet 10, the sheet 10 is stored using a special winding process, such as about a roll, wherein the winding process allows the web 10 to retain its thickness t as fabricated. The winding process is controlled to impart a predetermined maximum tension, and preferably substantially uniform tension, on the sheet 10. Accordingly, the tension is selected to prevent the thickness t of the matt 12 from being decreased.

## Claims

1. A method of constructing a nonwoven sheet using Asian cardboard, comprising:
providing Asian cardboard;
comminuting the Asian cardboard into predetermined reduced sized pieces;
combining the reduced sized pieces with heat bondable textile fibers and staple fibers to form a Substantially homogenous mixture;
forming a web from the mixture;
thermally bonding the constituent ingredients of the web to produce a matt of a desired thickness; and
laminating a scrim layer to at least one side of the matt while maintaining the thickness of the matt.

2. The method of claim 1 further including applying a chemical mixture including at least one of a flame retardant, a biocide and a binder to at least one surface of the matt while maintaining the thickness of the matt.

3. The method of claim 2 further including providing the chemical mixture including a flame retardant, a biocide and a binder.

4. The method of claim 2 further including applying the chemical mixture using a spraying process.

5. The method of claim 2 further including applying the chemical mixture to the side of the matt opposite the scrim layer.

6. The method of claim 2 further including drying and curing the chemical mixture.

7. The method of claim 6 further including performing the drying and curing before laminating the scrim layer to the matt.

8. The method of claim 1 further including providing the scrim layer as an impervious layer.

9. The method of claim 1 further including winding the matt and maintaining the thickness of the matt during the winding process.

10. The method of claim 9 further including controlling the tension applied to the matt during the winding process.

11. The method of claim 1 further including laminating the scrim layer to the matt without using nip rollers

## Patentansprüche

1. Verfahren zur Herstellung einer nicht-gewebten Platte unter Verwendung von asiatischem Karton, umfassend
Bereitstellen von asiatischem Karton;
Zerkleinern des asiatischen Kartons in vorbestimmte reduziert große Stücke;
Kombinieren der reduziert großen Stücke mit wärmeverbindbaren Textilfasern und Stapelfasern, um eine im Wesentlichen homogene Mischung herzustellen;
Herstellen eines Netzes aus der Mischung;
Thermisches Verbinden der einzelnen Bestandteile des Netzes, um eine Matte von gewünschter Dicke zu erzeugen; and
Laminieren einer Mullschicht an zumindest eine Seite der Matte, während die Dicke der Matte beibehalten wird.

2. Verfahren nach Anspruch 1, ferner umfassend Auftragen einer chemischen Mixtur mit zumindest einem Flammschutzmittel, einem Biozid und einem Bindemittel auf zumindest eine Oberfläche der Matte, während die Dicke der Matte beibehalten wird.

3. Verfahren nach Anspruch 2, ferner umfassend Bereitstellen der chemischen Mixtur mit einem Flammschutzmittel, einem Biozid und einem Bindemittel.

4. Verfahren nach Anspruch 2, ferner umfassend Auftragen der chemischen Mixtur unter Verwendung eines Sprühprozesses.

5. Verfahren nach Anspruch 2, ferner umfassend Auftragen der chemischen Mixtur auf die der Mullschicht gegenüberliegende Seite der Matte.

6. Verfahren nach Anspruch 2, ferner umfassend Trocknen und Aushärten der chemischen Mixtur.

7. Verfahren nach Anspruch 6, ferner umfassend Ausführen des Trocknens und des Aushärtens vor dem Laminieren der Mullschicht auf die Matte.

8. Verfahren nach Anspruch 1, ferner umfassend Bereitstellen der Mullschicht als eine undurchdringliche Schicht.

9. Verfahren nach Anspruch 1, ferner umfassend Wickeln der Matte und Beibehalten der Dicke der Matte während des Wickelprozesses.

10. Verfahren nach Anspruch 9, ferner umfassend Steuern der während des Wickelprozesses auf die Matte wirkenden Spannung.

11. Verfahren nach Anspruch 1, ferner umfassend Laminieren der Mullschicht auf die Matte ohne die Verwendung von Quetschwalzen.

## Revendications

1. Procédé de construction d'une feuille non tissée en utilisant du carton asiatique, comprenant :
la fourniture de carton asiatique ;
la fragmentation du carton asiatique en morceaux de taille réduite prédéterminée ;
la combinaison des morceaux de taille réduite prédéterminée avec des fibres textiles et des fibres courtes pouvant être liées thermiquement pour former un mélange sensiblement homogène ;
la formation d'une toile à partir du mélange ;
la liaison thermique des ingrédients constitutifs de la toile pour produire un matelas de fibres d'une épaisseur souhaitée ; et
la lamification d'une couche de canevas sur au moins un côté du matelas de fibres tout en maintenant l'épaisseur du matelas de fibres.

2. Procédé selon la revendication 1, comprenant en outre l'application d'un mélange chimique comprenant au moins une matière ignifuge, un biocide et un liant à au moins une surface du matelas de fibres tout en maintenant l'épaisseur du matelas de fibres.

3. Procédé selon la revendication 2, comprenant en outre la fourniture du mélange chimique comprenant une matière ignifuge, un biocide et un liant.

4. Procédé selon la revendication 2, comprenant en outre l'application du mélange chimique en utilisant un processus de pulvérisation.

5. Procédé selon la revendication 2, comprenant en outre l'application du mélange chimique au côté du matelas de fibres opposé à la couche de canevas.

6. Procédé selon la revendication 2, comprenant en outre le séchage et la cuisson du mélange chimique.

7. Procédé selon la revendication 6, comprenant en outre l'exécution du séchage et de la cuisson avant la lamification de la couche de canevas sur le matelas de fibres.

8. Procédé selon la revendication 1, comprenant en outre la fourniture de la couche de canevas en tant que couche imperméable.

9. Procédé selon la revendication 1, comprenant en outre l'enroulement du matelas de fibres et le maintien de l'épaisseur du matelas de fibres pendant le processus d'enroulement.

10. Procédé selon la revendication 9, comprenant en outre la commande de la tension appliquée au matelas de fibres pendant le processus d'enroulement.

11. Procédé selon la revendication 1, comprenant en outre la lamification de la couche de canevas sur le matelas de fibres sans utiliser de rouleaux pinceurs.
